# EUROPÄISCHE PATENTSCHRIFT

(11) **EP 2 616 648 B1**
(45) Veröffentlichungstag und Bekanntmachung des Hinweises auf die Patenterteilung: **14.12.2016**
(21) Anmeldenummer: 11767945.6
(22) Anmeldetag: 14.09.2011
(51) Int. Cl.: B03C 3/06, B03C 3/12, B03C 3/41, B03C 3/49, B03C 3/66, B03C 3/70, F01N 3/20, F01N 13/16, F01N 3/021, F01N 3/01, F01N 3/023, H02G 3/22

(54) **ANORDNUNG FÜR EINE STROMVERSORGUNG EINER KOMPONENTE IN EINEM ABGASSYSTEM**
ARRANGEMENT FOR A POWER SUPPLY UNIT OF A COMPONENT IN AN EXHAUST GAS SYSTEM
SYSTÈME D'ALIMENTATION EN COURANT D'UN ÉLÉMENT D'UN SYSTÈME D'ÉCHAPPEMENT

(30) Priorität: 15.09.2010 DE 102010045507
(43) Veröffentlichungstag der Anmeldung: 24.07.2013
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE); VORSMANN, Christian, 51105 Köln (DE)
(86) Internationale Anmeldenummer: PCT/EP2011/065903
(87) Internationale Veröffentlichungsnummer: WO 2012/035042

(56) Entgegenhaltungen:
- EP-A1- 1 961 929
- DE-A1- 4 114 935
- DE-A1- 19 533 088
- DE-A1-102007 000 327
- US-A- 4 939 466
- US-A- 5 177 961
- US-A- 5 670 746

## Beschreibung

Die vorliegende Erfindung betrifft eine Anordnung für eine Stromversorgung einer Komponente in einem Abgassystem, wobei insbesondere eine Stromversorgung für eine Elektrode zur Ausbildung eines elektrischen Feldes im Abgassystem angegeben wird.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

So werden für solche Elektrofilter regelmäßig (mehrere) Sprühelektroden und Kollektorelektroden vorgeschlagen, die in der Abgasleitung positioniert sind. Dabei werden bspw. eine zentrale Sprühelektrode, welche etwa mittig durch die Abgasleitung verläuft, und eine umgebende Mantelfläche der Abgasleitung als Kollektorelektrode dazu benutzt, einen Kondensator zu bilden. Mit dieser Anordnung von Sprühelektrode und der Kollektorelektrode wird quer zur Strömungsrichtung des Abgases ein elektrisches Feld gebildet, wobei die Sprühelektrode bspw. mit einer Hochspannung betrieben werden kann, die im Bereich von ca. 15 kV liegt. Hierdurch können sich insbesondere Korona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulomb-Kräfte zur Kollektorelektrode.

Neben Systemen, bei denen die Abgasleitung als Kollektorelektrode ausgeführt ist, sind auch Systeme bekannt, bei denen die Kollektorelektrode bspw. als Drahtgitter ausgebildet ist. Dabei erfolgt die Anlagerung von Partikeln an dem Drahtgitter zu dem Zweck, die Partikel ggf. mit weiteren Partikeln zusammenzuführen, um so eine Agglomeration zu erreichen. Das das Gitter durchströmende Abgas reißt dann die größeren Partikelagglomerate wieder mit und führt sie klassischen Filtersystemen zu.

Auch wenn sich die oben beschriebenen Systeme bislang zumindest in Versuchen geeignet für die Behandlung von Rußpartikeln herausgestellt haben, stellt doch die Umsetzung dieses Konzeptes für den Serienbetrieb bei Kraftfahrzeugen noch immer eine große technische Herausforderung dar. Dies gilt insbesondere hinsichtlich der stark schwankenden, zeitlich sehr hohen Rußbelastung im Abgas. Ebenso stellt die gewünschte Nachrüstbarkeit eines solchen Systems für derzeitig existierende Abgasanlagen noch ein großes Problem dar. Insbesondere treten im Abgassystem von Kraftfahrzeugen regelmäßig stoßartig ansteigende Abgasmengen auf, die bspw. bei stationären Verbrennungskraftmaschinen, die zur Stromerzeugung eingesetzt werden, nicht auftreten. Weiterhin sind Abgassysteme, bspw. aufgrund von Bodenunebenheiten, mechanischen Belastungen ausgesetzt. Zudem ist zu berücksichtigen, dass mit der gesteigerten Leistung bzw. Effektivität solcher Abgasanlagen hinsichtlich der Beseitigung von Rußpartikeln auch eine (periodische und/oder kontinuierliche) Regeneration der Filtersysteme erforderlich ist, bei der der Ruß in gasförmige Bestandteile überführt wird.

Bei der Regenerationen von Filtersystemen ist neben der intermittierenden Regeneration durch kurzzeitiges Aufheizen, das heißt Verbrennen des Rußes (katalytisch motivierte, oxidative Umsetzung), auch bekannt, Ruß mittels Stickstoffdioxid (NO₂) umzuwandeln. Der Vorteil der kontinuierlichen Regeneration mit Stickstoffdioxid ist, dass die Umwandlung von Ruß hier bereits bei deutlich tieferen Temperaturen (insbesondere kleiner 250 °C) stattfinden kann. Aus diesem Grund ist die kontinuierliche Regeneration in vielen Anwendungsfällen bevorzugt. Das führt jedoch zu dem Problem, dass sichergestellt sein muss, dass das Stickstoffdioxid im Abgas mit den angelagerten Rußpartikeln in ausreichendem Umfang in Kontakt kommt.

Auch in diesem Zusammenhang ergeben sich technische Schwierigkeiten bei der Realisierung eines dauerhaften Betriebes solcher Abgasanlagen bei Kraftfahrzeugen, wobei die unterschiedlichen Belastungen der Verbrennungskraftmaschinen zu unterschiedlichen Abgasströmen, Abgaszusammensetzungen und/oder Temperaturen führen.

Darüber hinaus ist zu berücksichtigen, dass bei der Bereitstellung solcher Komponenten für ein solches Ruß-Abscheide-System möglichst einfache Komponenten eingesetzt werden sollen, insbesondere auch solche, die sich im Rahmen einer Serienfertigung kostengünstig herstellen lassen. Außerdem ist gerade beim Design der Elektroden zu berücksichtigen, dass diese ggf. ausgerichtet in der Abgasleitung positioniert sein müssen, insbesondere so, dass ein unerwünscht hoher Staudruck bzw. eine unerwünschte Verwirbelung des Abgases im Bereich der Elektrode nicht eintritt.

Bei der Ausbildung eines solchen elektrischen Feldes ist zudem darauf zu achten, dass die hierfür erforderlichen Spannungen bzw. Ströme dauerhaft sicher bereitgestellt werden und insbesondere eine Gefährdung der Umgebung bzw. von Personen ausgeschlossen ist. Hierbei ist zu berücksichtigen, dass teilweise Spannungen im Bereich von 1 bis 30 kV realisiert werden sollen, wobei die Ströme regelmäßig relativ gering sind, bspw. kleiner 0,1 Ampere.

DE 195 33 088 A1 offenbart eine elektrisch isolierende Durchführung eines elektrischen Leiters durch einen metallischen Mantel eines Abgassystems einer Verbrennungskraftmaschine. Im Bereich der Durchführung weist der Mantel eine Hülse aus einem metallischen Werkstoff auf. In der Hülse ist der elektrische Leiter ausgebildet und mit der Hülse mit einer Isolierung elektrisch nicht leitend verbunden. Die Durchführung weist zudem eine Opferelektrode auf, um eine Elektrokorrosion der Durchführung zu vermeiden.

Die EP 1 961 929 A1 beschreibt die Anordnung von Elektroden in keramischen Wabenkörpern. Die Elektroden werden als Sensoren zur Messung der Beladung des Wabenkörpers mit Partikeln genutzt. Die Elektroden werden in keramisches Material eingegossen.

Hiervon ausgehend ist es Aufgabe der vorliegenden Erfindung, die mit Bezug auf den Stand der Technik geschilderten Probleme zumindest teilweise zu lösen. Insbesondere soll eine Anordnung für eine Stromversorgung vorgeschlagen werden, bei der ein sicherer Betrieb des Abgassystems dauerhaft ermöglicht ist. Zudem sollen die elektrische Kontaktierung und/oder der elektrische Leiter nach Möglichkeit einfach ausgestaltet sein, um gerade die Bereitstellung im Rahmen einer Serienfertigung zu begünstigen.

Diese Aufgaben werden gelöst mit einer Anordnung gemäß den Merkmalen des Patentanspruches 1. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die erfindungsgemäße Anordnung für eine Stromversorgung einer Komponente in einem Abgassystem hat wenigstens einen elektrischen Kontakt an einer Abgasleitung, wobei zumindest der elektrische Kontakt von einem elektrischen Isolationsmaterial umgeben ist.

Die Komponente, die hier in dem Abgassystem bereitgestellt wird, ist eine Elektrode zur Ausbildung eines elektrischen Feldes in der Abgasleitung. Selbstverständlich kann die Stromversorgung auch dazu genutzt werden, mehrere (ggf. verschiedene) Komponenten im Abgassystem elektrisch zu kontaktieren.

Hierfür ist erforderlich, dass ausgehend von der Stromversorgung ein elektrischer Kontakt hin zu der wenigstens einen Komponente im Abgassystem realisiert ist. Dabei durchdringt der elektrische Kontakt regelmäßig auch die Abgasleitung zumindest teilweise. Ein elektrischer Kontakt stellt in diesem Zusammenhang insbesondere eine Art elektrischer Stecker und/oder eine elektrische Durchführung durch die Abgasleitung dar. Der elektrische Kontakt ist insbesondere dazu geeignet, Spannungen oberhalb 1 kV (Kilo-Volt), insbesondere im Bereich von 2 kV bis 50 kV, zu realisieren, wobei regelmäßig geringe Ströme vorliegen, bspw. kleiner 1 Ampere oder sogar kleiner 0,1 Ampere. Der elektrische Kontakt kann demnach auf bzw. an einer Außenwand der Abgasleitung vorgesehen sein. Selbstverständlich ist auch möglich, dass mehrere solcher elektrischen Kontakte vorgesehen sind.

Zudem ist nun vorgesehen, dass der elektrische Kontakt zumindest teilweise von elektrischem Isolationsmaterial umgeben ist. Das heißt mit anderen Worten insbesondere, dass der elektrische Kontakt durch das elektrische Isolationsmaterial hindurchgeführt wird. Insbesondere ist dabei auch realisiert, dass bspw. Anschlüsse für die Stromversorgung bei dem elektrischen Kontakt durch das elektrische Isolationsmaterial von übrigen (metallischen) Bereichen der Abgasleitung beabstandet sind. Hierfür wird bevorzugt ein elektrisches Isolationsmaterial eingesetzt, das entsprechend durchschlagfest ist für die anliegende Spannung.

Im Hinblick auf die Verbindung zwischen Stromversorgung und dem elektrischen Kontakt ist insbesondere vorgesehen, dass es sich hierbei um einen elektrischen Leiter handelt, der eine elektrische, positive Schirmung aufweist. Hierfür kann insbesondere ein Koaxialkabel vorgesehen sein, insbesondere mit einer Schutzklasse IP 68. Der wenigstens eine elektrische Kontakt ist zudem im elektrischen Isolationsmaterial eingegossen, so dass ein Durchschlag bei Spannungen oberhalb von 1kV (KiloVolt) effektiv verhindert wird. Für diesen Fall ist insbesondere vorgesehen, dass der elektrische Kontakt selbst einen Stecker bildet, der z. B. in elektrischem Kontakt mit der Abgasleitung steht. Außerdem ist auch möglich, dass eine elektrische Durchführung ein Teil des elektrischen Kontaktes ist, die ebenfalls im Wesentlichen von dem elektrischen Isolationsmaterial eingegossen ist. Zu diesem Zweck kann der elektrische Kontakt bspw. an der Abgasleitung positioniert werden und dann mit einer Schicht des elektrischen Isolationsmaterials umgeben werden, welches dann aushärtet. Auf diese Weise lässt sich eine besonders einfache Herstellung für einen solchen isolierten elektrischen Kontakt erreicht.

Zudem wird auch vorgeschlagen, dass die Abgasleitung an einer Außenwand zumindest teilweise mit einem elektrischen Isolationsmaterial umgeben ist. Hierbei ist insbesondere gemeint, dass ein Teilabschnitt, insbesondere benachbart zu dem elektrischen Feld im Inneren des Abgassystems, eine äußere, die Außenwand umgebende Isolationsschicht bzw. Isolationsbeschichtung vorgesehen ist. Hierbei ist bspw. vorgesehen, dass ein ringförmiger Abschnitt auf der Außenwand der Abgasleitung mit einer Beschichtung versehen ist, wobei dort elektrisches Isolationsmaterial bspw. mittels eines Flammspritzverfahrens positioniert ist.

Bevorzugt ist das Isolationsmaterial so ausgebildet, dass auch nach einem Unfall eines Personenkraftfahrzeugs keine Bauteile freiliegen, an denen Hochspannungen anliegen und/oder dass solche Bauteile mit anderen Bauteilen beim Unfall in Kontakt treten können. Dies kann insbesondere durch eine geeignete Materialwahl, einer geeigneten Dicke des Isolationsmaterials und/oder einer geeigneten, über die zu isolierende Stelle hinausgehende Ausbreitung des Isolationsmaterials ausgehend von der zu isolierenden Stelle sein.

Ferner ist bevorzugt, dass das Isolationsmaterial temperaturbeständig ist. Das heißt, dass das Isolationsmaterial auch noch bei Temperaturen oberhalb von 500 °C [Grad Celsius] oder sogar oberhalb von 900 °C seine isolierenden und/oder mechanischen Eigenschaften nicht wesentlich ändert.

Erfindungsgemäß ist auch vorgesehen, dass wenigstens ein elektrischer Kontakt eine Durchführung durch die Abgasleitung bildet und wenigstens eine Elektrode aufnimmt. In diesem Fall ist bspw. eine Öffnung der Abgasleitung ausgebildet, durch die bzw. mit der die Durchführung realisiert ist. Die Durchführung kann insbesondere ein Teil des elektrischen Kontaktes sein, bzw. des Steckers. Die Durchführung ist bevorzugt ebenfalls mit elektrischem Isolationsmaterial gebildet und dabei insbesondere so formsteif ausgeführt, dass die Durchführung gleichzeitig als eine Art Halterung für die Elektroden dienen kann. Ggf. können hier auch Verbindungselemente hinsichtlich einer Stromüberleitung von der Stromversorgung hin zur (separaten) Elektrode vorgesehen sein. Grundsätzlich ist möglich, dass jeder elektrische Kontakt in der Anordnung eine Durchführung aufweist, dies ist aber nicht zwingend der Fall. Insbesondere kann ein elektrischer Kontakt auch mit mehreren Durchführungen ausgeführt sein. Insbesondere ist eine hochdichte Keramik als Isolationsmaterial in diesem Fall bevorzugt, wobei die Dicke der Keramikschicht so gewählt wird, dass ein Durchschlag bei Spannungen bis zu 40 kV effektiv verhindert wird.

Gerade in diesem Zusammenhang ist es besonders bevorzugt, dass die Durchführung mit einem Keramikrohr ausgebildet ist. Die Keramik stellt selbst ein elektrisches Isolationsmaterial dar, wobei die Rohr-Form zur Aufnahme einer Elektrode im Inneren besonders geeignet ist. Ebenso ist es ohne Probleme möglich, die Elektrode dauerhaft in dem Keramikrohr zu fixieren bzw. zu befestigen.

In einer Weiterbildung der Erfindung wird die erfindungsgemäße Anordnung durch einen in einem Rohr geführten elektrischen Kontakt, der von einem Isolationsmaterial umgeben ist, realisiert, wobei das Isolationsmaterial an mindestens einer Stelle mit dem gesamten Umfang mit einer inneren Fläche des Rohres wasserundurchlässig verbunden ist. Eine solche wasserundurchlässige Verbindung kann beispielsweise durch Kleben oder Crimpen realisiert werden. Das Rohr wiederum ist so mit der Abgasleitung verbunden, dass der elektrische Kontakt durch die Abgasleitung geführt wird. Erfindungsgemäß sind in der Abgasleitung wenigstens eine Elektrode und ein Partikelabscheider vorgesehen, wobei zwischen der wenigstens einen Elektrode und dem Partikelabscheider ein elektrisches Feld generierbar ist.

Ganz besonders bevorzugt ist dabei, dass die hier (direkt) nachgeordnete Partikelfalle als eine Art Kollektorelektrode dient. Damit werden die Rußpartikel, die den Bereich zwischen der zumindest einen Elektrode und der Partikelfalle durchströmen, in dem dort positionierten elektrischen Feld aufgeladen und schließlich zum Filtermaterial der Partikelfalle hin abgelenkt. Hierbei kann selbstverständlich gleichzeitig noch eine Agglomeration stattfinden. Bei der Partikelfalle handelt es sich insbesondere um einen so genannten offenen Nebenstromfilter, bei dem keine vollständig verschlossenen Strömungskanäle vorliegen. Die Partikelfalle ist vielmehr mit einem metallischen Vlies und metallischen Welllagen geformt, in denen Öffnungen, Leitstrukturen etc. vorgesehen sind. Die Leitstrukturen bilden dabei Strömungsengpässe in den Strömungspassagen, so dass die Verweilzeit bzw. Auftreffwahrscheinlichkeit für Rußpartikel im Inneren der Partikelfalle vergrößert wird. In diesem Zusammenhang wird auf die bekannten Patentveröffentlichungen der Anmelderin verwiesen, die zur näheren Charakterisierung der Partikelfalle und/oder deren Regeneration herangezogen werden können; insbesondere wird hierzu vollumfänglich auf die Beschreibung aus den folgenden Dokumenten Bezug genommen: WO-A-01/80978; WO-A-02/00326; WO-A-2005/099867; WO-A-2005/066469; WO-A-2006/136431; WO-A-2007/140932.

Die Regeneration einer solchen Partikelfalle erfolgt dabei bevorzugt kontinuierlich auf Basis der CRT-Methode. Hierzu kann der Vorrichtung z. B. ein Oxidationskatalysator vorgeschaltet sein, in dem (auch) Stickstoffmonoxid zu Stickstoffdioxid aufoxidiert wird, der dann mit dem Ruß in der Partikelfalle reagiert. Zudem ist auch möglich, dass eine solche oxidativ wirkende Beschichtung in der Partikelfalle selbst realisiert ist, entweder in einer Zone davon oder aber in allen Bereichen der Partikelfalle.

Die vorliegende Erfindung wird nachfolgend anhand der Figuren näher erläutert. Es ist darauf hinzuweisen, dass die in den Figuren gezeigten Ausführungsbeispiele zwar besonders bevorzugt sind, die Erfindung jedoch nicht darauf beschränkt ist. Es zeigen schematisch:
- Fig. 1:: einen Längsschnitt durch eine erste Ausführungsvariante einer Anordnung für eine Stromversorgung einer Komponente im Abgassystem,
- Fig. 2:: ein erstes Detail einer Ausführungsvariante der Anordnung, und
- Fig. 3:: ein weiteres Detail einer weiteren Ausführungsvariante,
- Fig. 4:: ein weiteres Detail einer weiteren Ausführungsvariante.

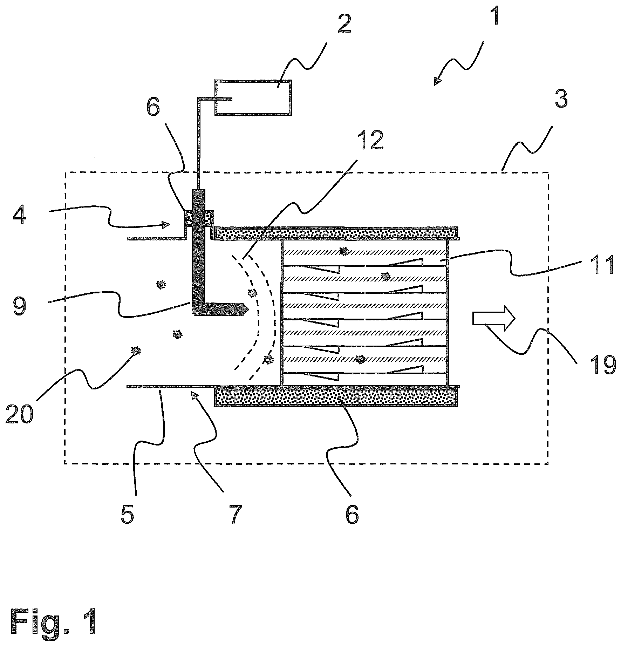

Fig. 1 veranschaulicht eine Anordnung 1 für eine Stromversorgung 2 einer Komponente in einem Abgassystem 3. Hierzu ist zentral die Abgasleitung 5 im Längsschnitt schematisch dargestellt, die von einem Abgas in der Strömungsrichtung 19 durchströmt wird. Das Abgas beinhaltet dabei Partikel 20 insbesondere Ruß, der mit einem Partikelabscheider 11 (so genannter offener Nebenstromfilter) aus dem Abgas entfernt werden soll.

Zudem weist die Anordnung 1 eine zentral angeordnete Elektrode 9 auf. Die Elektrode 9 dient dazu, zwischen der Elektrode 9 und dem Partikelabscheider 11 ein elektrisches Feld 12 zu generieren.

Damit nun ein erforderlicher Stromfluss für die Generierung des elektrischen Feldes 12 bereitgestellt werden kann, ist die Elektrode 9 mit der Stromversorgung 2 elektrisch verbunden. Dies kann außerhalb der Abgasleitung 5 bspw. mit Hilfe eines Koaxialkabels erfolgen, das bis hin zu einem elektrischen Kontakt 4 geleitet wird. Beim Durchdringen der Außenwand an der Abgasleitung 5 wird aufgrund des dort vorgesehenen elektrischen Isolationsmaterials 6 vermieden, dass ein Durchschlag hin zu benachbarten Bereichen der Abgasleitung 5 erfolgt. Hierfür ist einerseits der elektrische Kontakt 4 von einem elektrischen Isolationsmaterial 6 umgeben, außerdem ist auch noch eine Außenwand 7 benachbart zu dem elektrischen Kontakt 4 um das elektrische Feld 12 und den Partikelabscheider 11 herum ausgebildet.

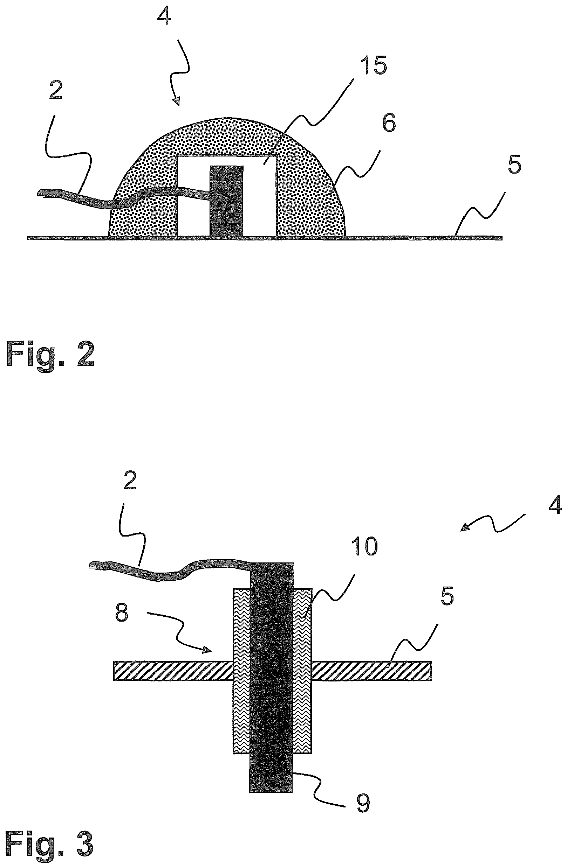

Fig. 2 zeigt im Detail eine Stecker-Lösung für einen elektrischen Kontakt 4. Die als Koaxialkabel ausgeführte Stromversorgung 2 endet dabei in einem Stecker 15, der an der Abgasleitung 5 positioniert ist. Der gesamte Stecker 15 ist dabei von elektrischem Isolationsmaterial 6 umgeben. Der Stecker 15 ist insbesondere in dem elektrischen Isolationsmaterial 6, das auf der Abgasleitung 5 haftet, eingegossen.

Fig. 3 zeigt eine weitere Ausführungsvariante eines elektrischen Kontaktes 4 nach Art einer Durchführung 8. Dabei durchdringt die Stromversorgung 2 bzw. die Elektrode 9 die Abgasleitung 5. Für eine isolierte Durchführung ist zudem vorgesehen, dass ein Keramikrohr 10 die Abgasleitung 5 durchdringt und damit sicher die Stromversorgung 2 bzw. die Elektrode 9 elektrisch isoliert hindurchführt.

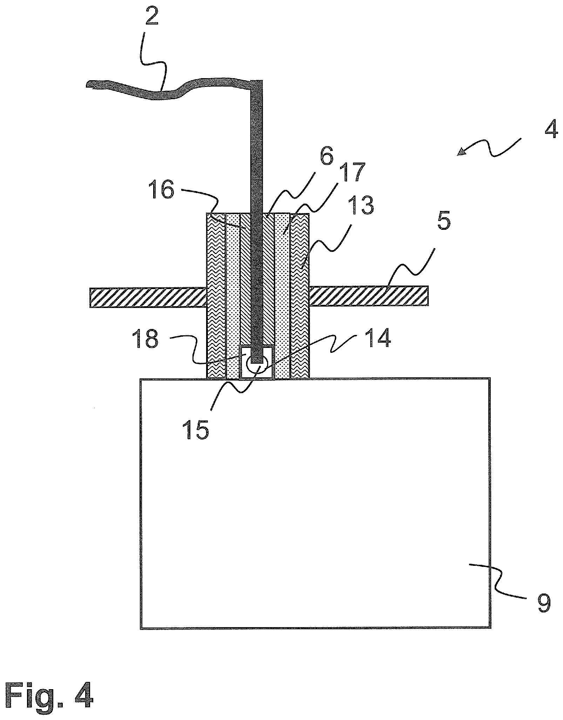

Fig. 4 zeigt noch eine weitere Ausführungsvariante eines elektrischen Kontaktes 4, bei der ein Rohr 13 in der Abgasleitung 5 angebracht ist. Die Stromversorgung 2 ist in dem Rohr 13 von einem elektrischen Isolationsmaterial 6 als Schutzschicht 16 umgeben, die wiederum mittels eines Klebers 17 in dem Rohr 13 wasserundurchlässig angebracht ist. Die Kontaktierung einer Elektrode 9 erfolgt über eine Verbindung 14 und einen Stecker 15 mit dem Stromverteiler 18.

Damit löst die Erfindung die mit Bezug auf den Stand der Technik geschilderten Probleme zumindest teilweise. Insbesondere wurde eine Anordnung für eine Stromversorgung vorgeschlagen, bei der ein sicherer Betrieb des Abgassystems dauerhaft ermöglicht ist. Zudem sind die elektrische Kontaktierung und/oder der elektrische Leiter einfach ausgestaltet, um gerade die Bereitstellung im Rahmen einer Serienfertigung zu begünstigen.

### Bezugszeichenliste

- 1: Anordnung
- 2: Stromversorgung
- 3: Abgassystem
- 4: elektrischer Kontakt
- 5: Abgasleitung
- 6: elektrisches Isolationsmaterial
- 7: Außenwand
- 8: Durchführung
- 9: Elektrode
- 10: Keramikrohr
- 11: Partikelabscheider
- 12: elektrisches Feld
- 13: Rohr
- 14: Verbindung
- 15: Stecker
- 16: Schutzschicht
- 17: Kleber
- 18: Stromverteiler
- 19: Strömungsrichtung
- 20: Partikel

## Patentansprüche

1. Anordnung (1) für eine Stromversorgung (2) einer Komponente in einem Abgassystem (3), bei der wenigstens ein elektrischer Kontakt (4) an einer Abgasleitung (5) vorgesehen ist, wobei der wenigstens eine elektrische Kontakt (4) eine Durchführung (8) durch die Abgasleitung (5) bildet und wenigstens eine Elektrode (9) aufnimmt und bei der zumindest der elektrische Kontakt (4) von einem elektrischen Isolationsmaterial (6) umgeben ist, wobei in der Abgasleitung (5) wenigstens eine Elektrode (9) und ein Partikelabscheider (11) vorgesehen sind, wobei zwischen der wenigstens einen Elektrode (9) und dem Partikelabscheider (11) ein elektrisches Feld (12) generierbar ist, **dadurch gekennzeichnet, dass** der wenigstens eine elektrische Kontakt (4) in elektrischem Isolationsmaterial (6) eingegossen ist, so dass ein Durchschlag bei Spannungen zwischen 1 - 40 kV [kiloVolt] effektiv verhindert wird.

2. Anordnung (1) nach Patentanspruch 1, bei der die Abgasleitung (5) an einer Außenwand (7) zumindest teilweise mit einem elektrischen Isolationsmaterial (6) umgeben ist.

3. Anordnung (1) nach Patentanspruch 1 oder 2, bei der die Durchführung (8) mit einem Keramikrohr (10) gebildet ist.

4. Anordnung (1) nach einem der vorhergehenden Patentansprüche, wobei die Durchführung (8) mit elektrischem Isolationsmaterial (6) gebildet und dabei so formsteif ausgeführt ist, dass die Durchführung (8) gleichzeitig als eine Art Halterung für die Elektrode (9) dient.

5. Anordnung (1) nach einem der vorhergehenden Patentansprüche, wobei das elektrische Isolationsmaterial (6) eine hochdichte Keramik umfasst und eine Dicke der Keramikschicht so gewählt ist, dass ein Durchschlag bei Spannungen bis zu 40 kV [kiloVolt] effektiv verhindert wird.

6. Anordnung (1) nach einem der vorhergehenden Patentansprüche, wobei der nachgeordnete Partikelabscheider (11) als Kollektorelektrode dient.

## Claims

1. Arrangement (1) for a power supply unit (2) of a component in an exhaust gas system (3), in which at least one electrical contact (4) is provided on an exhaust line (5), wherein the at least one electrical contact (4) forms a feedthrough (8) through the exhaust line (5) and accommodates at least one electrode (9), and in which at least the electrical contact (4) is surrounded by an electrical insulating material (6), wherein at least one electrode (9) and one particle separator (11) are provided in the exhaust line (5), wherein an electric field (12) can be generated between the at least one electrode (9) and the particle separator (11), **characterized in that** the at least one electrical contact (4) is cast in electrical insulating material (6) so that a flashover in the event of voltages between 1-40 kV [kilovolts] is effectively prevented.

2. Arrangement (1) according to Patent Claim 1, in which the exhaust line (5) is at least partially surrounded by an electrical insulating material (6) on an outer wall (7).

3. Arrangement (1) according to Patent Claim 1 or 2, in which the feedthrough (8) is formed with a ceramic pipe (10).

4. Arrangement (1) according to one of the preceding patent claims, where the feedthrough (8) is formed with electrical insulating material (6) and at the same time is embodied to be so dimensionally rigid that the feedthrough (8) simultaneously serves as a type of securing means for the electrode (9).

5. Arrangement (1) according to one of the preceding patent claims, wherein the electrical insulating material (6) comprises a high-density ceramic, and a thickness of the ceramic layer is chosen such that a flashover in the event of voltages up to 40 kV [kilovolts] is effectively prevented.

6. Arrangement (1) according to one of the preceding patent claims, wherein the particle separator (11) which is arranged downstream serves as a collector electrode.

## Revendications

1. Système (1) destiné à une alimentation en courant (2) d'un composant d'un système d'échappement (3), dans lequel il est prévu au moins un contact électrique (4) sur un tuyau d'échappement (5), dans lequel l'au moins un contact électrique (4) forme une traversée (8) à travers le tuyau d'échappement (5) et reçoit au moins une électrode (9) et dans lequel au moins le contact électrique (4) est entouré d'un matériau d'isolation électrique (6), dans lequel il est prévu dans le tuyau d'échappement (5) au moins une électrode (9) et un séparateur de particules (11), dans lequel un champ électrique (12) peut être généré entre l'au moins une électrode (9) et le séparateur de particules (11), **caractérisé en ce que** l'au moins un contact électrique (4) est encapsulé dans un matériau d'isolation électrique (6) de manière à empêcher de manière efficace un claquage à des tensions comprises entre 1 et 40 kV [kiloVolt].

2. Système (1) selon la revendication 1, dans lequel le tuyau d'échappement (5) est au moins partiellement entouré d'un matériau d'isolation électrique (6) sur une paroi extérieure (7).

3. Système (1) selon la revendication 1 ou 2, dans lequel la traversée (8) est formée de manière à comporter un tube de céramique (10).

4. Système (1) selon l'une quelconque des revendications précédentes, dans lequel la traversée (8) est formée de manière à comporter un matériau d'isolation électrique (6) et est de ce fait réalisée de manière non déformable afin que la traversée (8) soit simultanément utilisée en tant que support pour l'électrode (9).

5. Système (1) selon l'une quelconque des revendications précédentes, dans lequel le matériau d'isolation électrique (6) comprend une céramique à haute densité et dans lequel l'épaisseur de la couche de céramique est sélectionnée de manière à empêcher efficacement un claquage à des tensions allant jusqu'à 40 kV [kiloVolt].

6. Système (1) selon l'une quelconque des revendications précédentes, dans lequel le séparateur de particules (11) disposé en aval est utilisé en tant qu'électrode de collecteur.
